# EUROPEAN PATENT APPLICATION

(11) **EP 2 085 916 A1**
(43) Date of publication of application: **05.08.2009**
(21) Application number: 09151120.4
(22) Date of filing: 22.01.2009
(51) Int. Cl.: G06Q 10/00

(54) **Knowledge transfer in a project environment**

(30) Priority: 22.01.2008 IN MU01472008
(71) Applicant: Accenture Global Services GmbH, 8200 Schaffhausen (CH)
(72) Inventor: Agrawal, Pyush, 110092 DELHI (IN)
(74) Representative: de Beaumont, Michel

(57) **Abstract**

Various techniques for effecting knowledge transfer are provided. In one embodiment, knowledge transfer tasks are identified through parsing of one or more repositories comprising project-related artifacts to ascertain tasks that are relevant to a transitioning project participant, and that may be further analyzed to determine whether knowledge transfer is necessary. In a similar vein, knowledge transfer recipients may be identified through similar parsing of the one or more repositories to identify project participants that are relevant to knowledge transfer tasks, with the resulting list of associated project participants narrowed down to selected knowledge transfer recipients according to their respective ability/availability to receive the knowledge transfer. Because these processes can be automated, including the use of an interactive interface, and based on stored artifacts, the subjectivity and variability of prior art techniques may be substantially reduced.

## Description

### FIELD OF THE INVENTION

The instant disclosure relates generally to systems for project management and, in particular, to a system and techniques for performing knowledge transfer in a project environment.

### BACKGROUND OF THE INVENTION

Project management concerns the organization and management of resources (e.g., people, materials, etc.) in such a way that the project is completed within defined scope, quality, time and cost constraints. A constant challenge in project management is how to preserve project-related knowledge, particularly project-specific knowledge, in an environment of continuous personnel attrition and project roll-off (i.e., transition of personnel from one project to another). For example, in the information technology industry or other industries that are software-development intensive, when a project participant leaves the project, that participant may leave with a lot of knowledge about the project that may not be replicated within or otherwise available to remaining project participants. Failure to transfer knowledge from one or more transitioning project participants to other remaining project participants can have a significant negative impact on a variety of project parameters, such as quality, delivery time and costs due to the complete loss of such knowledge, or the need to reproduce it from scratch.

To minimize the impact caused by such participant changes, it is desirable to effect knowledge transfer when necessary. As used herein, knowledge transfer encompasses any process, mechanism, technique, etc. for either documenting the knowledge to be transferred and/or engaging in the necessary activities (e.g., physical transfer of documents, interpersonal discussions, participation in training, etc.) to transfer the knowledge from the transitioning (i.e., departing) project participant to at least one recipient. Unfortunately, most existing technique for accomplishing such knowledge transfer are ad hoc in nature and vary in terms of effectiveness based on the experience, availability and judgment of project management.

Thus, it would be advantageous to provide techniques that overcome the above-described limitations of the prior art.

### SUMMARY OF THE INVENTION

The instant disclosure describes various techniques for accomplishing knowledge transfer in an efficient, repeatable manner. In a presently-described embodiment, this is achieved through the use of one or more processing devices suitably configured to assist in the identification of tasks requiring knowledge transfer and the identification of suitable knowledge transfer recipients to receive the knowledge transfer. In one embodiment, a plurality of artifacts concerning a project are stored in one or more repositories. A plurality of tasks concerning the project may be identified based on the stored artifacts. When a transitioning project participant is identified, one or more participant-related tasks from among the plurality of projected-related tasks, specifically concerning the transitioning project participant, can be identified. Based on the participant-related tasks thus identified, one or more knowledge transfer tasks requiring knowledge transfer may be identified, and information identifying such knowledge transfer tasks may be subsequently stored.

In another embodiment, project participants for a given project may be identified based on the artifacts stored in the at least one repository. A subset of the project participants that are relevant to at least one knowledge transfer task are thereafter identified, and at least one of these associated project participants may be selected as knowledge transfer recipients. As before, information identifying such knowledge transfer recipients may be subsequently stored. Based on the knowledge transfer tasks and knowledge transfer recipients identified in this manner, more effective, complete and efficient knowledge transfer may be accomplished.

According to one aspect of the present invention, there is provided, in at least one processing device, a method comprising identifying, based on artifacts concerning a project stored in at least one repository, a plurality of tasks concerning the project; identifying, from among the plurality of tasks, at least one participant-related task relevant to a transitioning project participant; determining, for each of the at least one participant-related task, whether the participant-related task requires knowledge transfer to provide at least one knowledge transfer task; and storing information identifying the at least one knowledge transfer task.

According to one embodiment of the present invention, identifying the plurality of tasks further comprises applying at least one project-specific task filter to the at least one repository.

According to another embodiment of the present invention, identifying the at least one participant-related task further comprises identifying the at least one participant-related task based on information regarding the transitioning project participant.

According to another embodiment of the present invention, determining whether each participant-related task requires knowledge transfer further comprises determining whether each participant-related task meets at least one knowledge transfer condition.

According to another embodiment of the present invention, the method further comprises displaying the information identifying the at least one knowledge transfer task.

According to another embodiment of the present invention, the method further comprises identifying, based on the at least one knowledge transfer task, at least one knowledge transfer recipient, from a plurality of project participants, able to receive knowledge transfer concerning the at least one knowledge transfer task; and storing information identifying the at least one knowledge transfer recipient.

According to another aspect of the present invention, there is provided, in at least one processing device, a method comprising identifying, based on artifacts concerning a project stored in at least one repository, a plurality of project participants; identifying, from among the plurality of project participants, at least one associated project participant relevant to at least one knowledge transfer task; selecting, from the at least one associated project participant, at least one knowledge transfer recipient to receive knowledge transfer concerning the at least one knowledge transfer task; and storing information identifying the at least one knowledge transfer recipient.

According to one embodiment of the present invention, identifying the at least one associated project participant further comprises identifying those participants of the plurality of project participants that have contributed to the at least one knowledge transfer task.

According to another embodiment of the present invention, identifying the at least one associated project participants further comprises identifying those participants of the plurality of participants that have contributed to at least one additional task closely related to the at least one knowledge transfer task.

According to another embodiment of the present invention, selecting the at least one knowledge recipient further comprises assessing, for each of the at least one associated project participant, ability of the associated project participant to receive the knowledge transfer.

According to another embodiment of the present invention, the method further comprises displaying the information identifying the at least one knowledge transfer recipient.

According to another embodiment of the present invention, the method further comprises identifying, based on a transitioning project participant, the at least one knowledge transfer task from a plurality of tasks concerning the project; and storing information identifying the at least one knowledge transfer task.

According to another aspect of the present invention, there is provided a device for performing knowledge transfer in project environment, the device comprising a first identifying means configured to identify, based on artifacts concerning a project stored in at least one repository in communication with the processing device, a plurality of tasks concerning the project; a second identifying means configured to identify, from among the plurality of tasks, at least one participant-related task relevant to a transitioning project participant; a determining means configured to determine, for each of the at least one participant-related task, whether the participant-related task requires knowledge transfer to provide at least one knowledge transfer task; and a storage means configured to store information identifying the at least one knowledge transfer task.

According to one embodiment of the present invention, the device is configured to identify whether the plurality of tasks are further operative to apply at least one project-specific task filter to the at least one repository.

According to another embodiment of the present invention, the device is configured to identify whether the at least one participant-related task are further operative to identify the at least one participant-related task based on information regarding the transitioning project participant.

According to another embodiment of the present invention, the device is configured to determine whether each participant-related task requires knowledge transfer are further operative to determine whether each participant-related task meets at least one knowledge transfer condition.

According to another embodiment of the present invention, the device further comprises a display means configured for displaying the information identifying the at least one knowledge transfer task.

According to another embodiment of the present invention, the device further comprises a third identifying means configured to identify, based on the at least one knowledge transfer task, at least one knowledge transfer recipient, from a plurality of project participants, able to receive knowledge transfer concerning the at least one knowledge transfer task; and a storage means configured to store information identifying the at least one knowledge transfer recipient.

According to another aspect of the present invention, there is provided a device for performing knowledge transfer in project environment, the device comprising a first identifying means configure to identify, based on artifacts concerning a project stored in at least one repository in communication with the processing device, a plurality of project participants; a second identifying means configure to identify, from among the plurality of project participants, at least one associated project participant relevant to at least one knowledge transfer task; a selecting means configured to select, from the at least one associated project participant, at least one knowledge transfer recipient to receive knowledge transfer concerning the at least one knowledge transfer task; and a storing means configured to store information identifying the at least one knowledge transfer recipient.

According to one embodiment of the present invention, the device is configured to identify whether the at least one associated project participant are further operative to identify those participants of the plurality of project participants that have contributed to the at least one knowledge transfer task.

According to another embodiment of the present invention, the device is configured to identify whether the at least one associated project participants are further operative to identify those participants of the plurality of participants that have contributed to at least one additional task closely related to the at least one knowledge transfer task.

According to another embodiment of the present invention, the device is configured to select the at least one knowledge recipient are further operative to assess, for each of the at least one associated project participant, ability of the associated project participant to receive the knowledge transfer.

According to another embodiment of the present invention, the device further comprises a displaying means configured to display the information identifying the at least one knowledge transfer recipient.

According to another embodiment of the present invention, the device further comprises: a third identifying means configured to identify, based on a transitioning project participant, the at least one knowledge transfer task from a plurality of tasks concerning the project; and a storing means configured to store information identifying the at least one knowledge transfer task.

### BRIEF DESCRIPTION OF THE DRAWINGS

The features described in this disclosure are set forth with particularity in the appended claims. These features and attendant advantages will become apparent from consideration of the following detailed description, taken in conjunction with the accompanying drawings. One or more embodiments are now described, by way of example only, with reference to the accompanying drawings wherein like reference numerals represent like elements and in which:
FIG. 1 is an illustration of a technique for knowledge transfer in accordance with various embodiments described herein;
FIG. 2 is a schematic block diagram of a system in accordance with various embodiments described herein;
FIG. 3 is a flowchart illustrating processing for identifying tasks requiring knowledge transfer in accordance with an embodiment described herein;
FIG. 4 is a flowchart illustrating, in greater detail, processing for identifying tasks requiring knowledge transfer in accordance with an embodiment described herein;
FIG. 5 is a flowchart illustrating processing for identifying knowledge transfer recipients in accordance with an embodiment described herein;
FIG. 6 is a flowchart illustrating, in greater detail, processing for identifying knowledge transfer recipients in accordance with an embodiment described herein; and
FIGs. 7-10 illustrates various examples of graphical user interface displays in accordance with various embodiments described herein.

### DETAILED DESCRIPTION OF THE PRESENT EMBODIMENTS

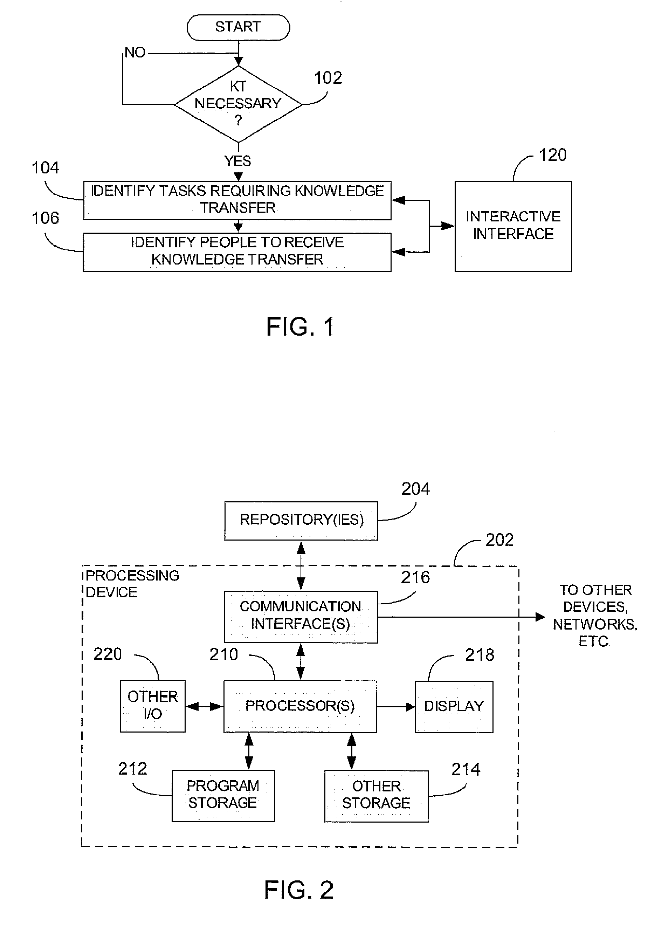

Referring now to FIG. 1, a technique for effecting knowledge transfer in accordance with the instant disclosure is illustrated. In particular, it is determined at block 102 whether knowledge transfer is even necessary. The need for knowledge transfers generally arise as a result of one or more project participants transitioning away from a given project. For example, such transitions may include a given project participant terminating his/her employment, or a project participant being assigned to work on another project that will substantially diminish (if not entirely eliminate) the participant's ability to continue working on the project. As a practical matter, the reasons for such transitions do not limit the generality of the instant disclosure.

Regardless of the reason for the transition, once it is determined that one or more participant transitions are occurring, identification of tasks requiring knowledge transfer and of knowledge transfer recipients is undertaken at block 104 and block 106, respectively. As shown, and in an embodiment described in greater detail below, the identifications undertaken at blocks 104, 106 are performed with the assistance of an interactive interface 120, such as a graphical user interface. Generally, identification of tasks requiring knowledge transfer at block 104 is performed based on the identification(s) of the transitioning project participant(s) from block 102, although this is not a requirement. As used herein, a task encompasses any discretely identifiable subject matter, whether expressed in tangible or intangible form, that may be amenable to knowledge transfer. Often, such tasks are project-dependent and may vary based on the particular nature of the transitioning participant's involvement in the project. For example, in the context of a software development project, tasks may be delimited by specific modules being provided as part of the project, particular functionality (e.g., web interface operation, specific data processing algorithms, etc.) to be included in the eventual software product or roles within the project (e.g., web interface team leader, hardware platform expert, etc.). The interactive interface 120 and the processing encompassed by block 104 and block 106 is preferably carried out by a suitably-programmed processing device, such as that described below with reference to FIG. 2.

Referring now to FIG. 2, a system 200 comprising at least one processing device 202 (only one shown for ease of illustration) in communication with one or more repositories 204 is illustrated. Although not shown, it is understood that the processing device 202 may communicate with the repository(ies) 204 via any convenient communication channel. For example, in one embodiment, the processing device 202 communicates with the repository(ies) 204 via one or more suitable networks, including proprietary networks such as local area networks (LANs) and/or public communication networks such as the Internet or World Wide Web. Further still, wireless communication channels may also be employed. Those of skill in the art will appreciate that any of a number of suitable techniques may be employed for this purpose and that the instant disclosure is not limited in this regard.

As shown, the device 202 comprises at least one processor 210 coupled to one or more storage components 212, 214. For example, in one embodiment, a program storage component 212 is provided and comprises stored, executable instructions for use in controlling operation of the one or more processors 210, whereas another storage component 214 is provided and comprises stored data that may be operated upon the one or more processors 210. Although the program storage component 212 and other storage component 214 are illustrated as being separate from each other, in practice, it is understood that the storage components 212, 214 may be implemented using the same physical devices. For example, the storage components 212, 214 may comprise one or more volatile and/or non-volatile memories including but not limited to random access memory (RAM), read-only memory (ROM), electrically-erasable programmable read-only memory (EEPROM), etc. The one or more processors 210 may comprise a microprocessor, microcontroller, digital signal processor or any other components or combinations thereof capable of executing the stored instructions and operating upon the stored data. Processor and storage arrangements of the type illustrated in FIG. 2 are well known to those having ordinary skill in the art, and various other suitable arrangements may be readily incorporated. For example, the processing device 202 may be embodied in a desktop/laptop/handheld computer, a personal digital assistant, a mobile phone, etc. Regardless of the particular type of device 202 employed, such arrangements may be used to implement processing in accordance with the various embodiments described below.

In an embodiment, the device 202 comprises one or more user input/output devices 220, a display 218, and one or more communication interfaces 216, all in communication with the processor(s) 210. The user input/output device(s) 220 may comprise any mechanism for providing user input to, or rendering user output from, the processor(s) 210. For example, in order to accept user input, the device(s) 220 may comprise a keyboard, a mouse, a touch screen, stylus or any other means known to those having ordinary skill in the art. When rendering user output perceivable for the user, the device(s) 220 may comprise a speaker, indicator lights, touch screen, etc. Moreover, the user input/output device(s) 220 may comprise various media drives, such as flash drives, magnetic disc drives and/or optical disc drives. The display 218 may comprise any conventional display mechanism such as a cathode ray tube (CRT), flat panel display, or any other display mechanism known to those having ordinary skill in the art. Techniques for providing display data from the processor(s) 210 to the display 218 are well known in the art. The one or more communication interfaces 216 may comprise hardware and/or software that allows the processor(s) 210 to communicate with the one or more repositories 204 via wired or wireless network, as described above. As further shown, the one or more communication interfaces 216 may also be used to communicate with devices other than the repository(ies) 204, such as other processing devices, networks, email servers, etc. One again, implementation of such interfaces 216 are well known to those of skill in the art and need not be described in greater detail herein.

The one or more repositories 204 may be implemented using one or more suitably programmed server computers depending on the types of artifacts stored therein. As known in the art, such servers can be co-located or geographically distributed. Alternatively, the at least one repository 204 may include the memory of one or more local computers (e.g., user terminals), whether directly accessible or via a networked environment. Those having ordinary skill in the art will appreciate that virtually any type device capable of storing data may be considered a repository, limited only by the ability of a suitable processing device (e.g., processing device 202) to access the data stored thereon. As used herein, an artifact is any discrete component of data or aggregation of such discrete components of data, typically represented in one or more digital formats, that are associated with a given project. For example, such project-related artifacts may comprise documents encompassing business or technical information, emails, short message service (SMS) messages, etc. that are generated by various project participants when working on the project. Artifacts may also include more sophisticated data types such as web pages, web logs, wiki pages, images, videos, etc. Further still, in the case of an information technology-related or other software-intensive project, artifacts may include software code, software modules, maintenance & service reports, as well as issue tracker reports or the like. Regardless of the particular formats employed, the artifacts stored in the one or more repositories are capable of being analyzed in order to determine project-related tasks and participants, as described in greater detail below.

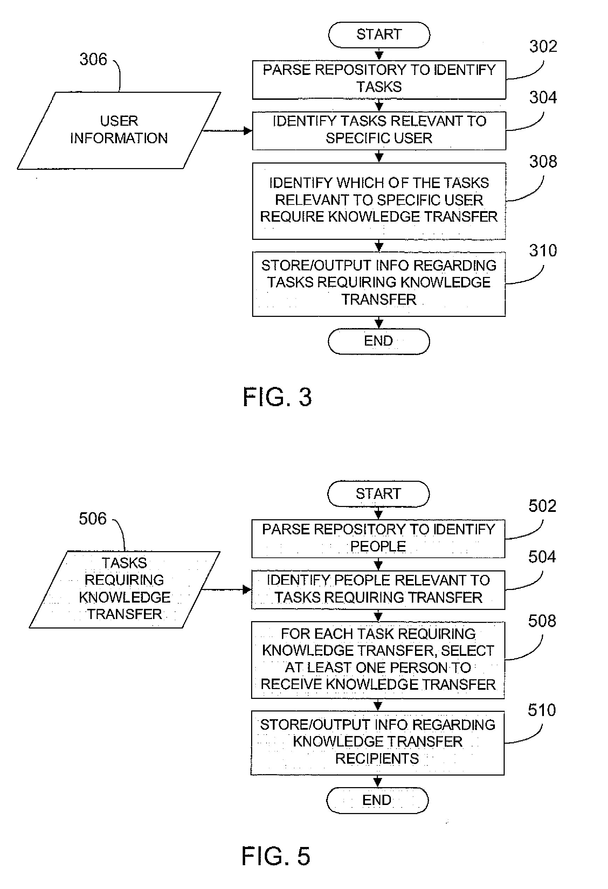

Referring now to FIGs. 3-6, processing in accordance with various embodiments is further described. As noted above, the processing illustrated in FIGs. 3-6 is preferably implemented using processing devices substantially similar to those described above. Beginning with FIG. 3, a technique for the identification of tasks requiring knowledge transfer is illustrated. At block 302, the one or more repositories 204 are parsed to identify at least one task associated with a given project. For example, particularly with regard to software development projects, this is accomplished determining what software modules are being developed in the project. Such information may be available, for example, in requirements or architecture documents stored in the repository(ies). In this case, each software module may be considered as a separate task. Other distinguishing criteria could also be used for this purpose. For example, rather than relying on distinct structural components (such as discrete software modules), functional differences may be employed, e.g., user interface functions versus database access functions, such that each identified task comprises a suitably abstracted functional area. Further still, differences in project responsibilities, as defined by job descriptions or other templates, may be used for this purpose to the extent that different roles within a project potentially imply specialized knowledge. For example, web page developers of a certain seniority may be assumed to possess certain knowledge, whereas team leaders may be assumed to possess different types of knowledge. Developing this example further, the team leaders may be assumed to have: (a) knowledge from past experience, (b) knowledge of the project only at his/her level such as scheduling, timeline, and client information, and (c) some part knowledge that his/her team holds. On this latter point, the team leader might not be programming and developing software code but (s)he is overlooking the development and guiding the team to do it; through such guidance, (s)he gains knowledge of the system. So conversely true, the teams knowledge is also a part of the team leaders knowledge. Those of ordinary skill in the art will appreciate that such techniques can be applied to any type of artifacts such as issue trackers, emails, documents, etc. The tasks identified in this manner effectively constitute the "universe" of task potentially requiring knowledge transfer.

Continuing at block 304, those tasks, if any, from among the tasks identified at block 302 that are relevant to a specific project participant are further identified. In an embodiment, the specific project participant used for this purpose is a transitioning project participant as identified by user information 306. The user information 306 may comprise virtually any type of data that allows a particular project participant to be identified. For example, in addition to a name, identification code, contact information, email address or other typical identifying data, the user information 306 may also include information concerning the participant's role within the project, his/her technological expertise and level of skill, his/her domain expertise, his/her project schedule information etc. Regardless of its format, the user information 306 is used to identify those tasks that are relevant to the particular participant. For example, where potential tasks requiring knowledge transfer are delineated according to separate software modules, the relevant tasks may include those modules for which the participant has some authoring or testing responsibility. As another example, in a software services/maintenance project, the issue tracker reports can include call signs of the users that can be used for this purpose. In case of documents, the authoring and modification information could also be used apart from any identifying information contained within the document. In case of communication artifacts (e.g., emails, SMS, etc.), the "To, cc, bcc" information can be used along with any identifying information contained within the artifact. In the event that no tasks are identified as being relevant to the participant, then the remaining processing is not necessary.

Assuming one or more participant-related tasks are identified at block 304, processing continues at block 308 where those tasks of the at least one participant-related task that require knowledge transfer are identified. Not all participant-related tasks may require knowledge transfer, as in the cases, for example, where the knowledge associated with a particular task is either well known by other project participants, is well documented, has become obsolete and/or not of a critical nature to the project. Conversely, factors weighing in favor of instituting knowledge transfer include, but are not limited to, the knowledge associated with a task being restricted to the participant or of a highly critical nature to the success of the project or the desire to assign a new knowledge holder to the artifact(s). Once again, techniques for assessing the various factors both for and against knowledge transfer for a particular task will depend on the nature of the task.

Referring once again to the example of tasks defined along software module boundaries, knowledge transfer may be favored in those instances in which the participant has had primary or sole authoring or testing responsibility of a given software module, where the module is of critical importance to the project or incorporates specialized knowledge that is substantially unique to the participant. As noted above, if no tasks requiring knowledge transfer are identified at block 308, further processing is not required.

If it is desirable to perform knowledge transfer for one or more of the participant-related tasks, processing continues at block 310 where information identifying such knowledge transfer tasks is stored and/or output. Because the information identifying the knowledge transfer tasks should be sufficient to identify exactly what knowledge should be transferred, its particular content and form will necessarily depend upon the nature of the knowledge transfer tasks. For example, in the case of tasks as software modules, simple identification of the software modules may suffice for this purpose. On the other hand, where tasks are defined according to specific functionality or specialized knowledge, the information identifying a knowledge transfer task may require more detailed information identifying such function or knowledge with particularity.

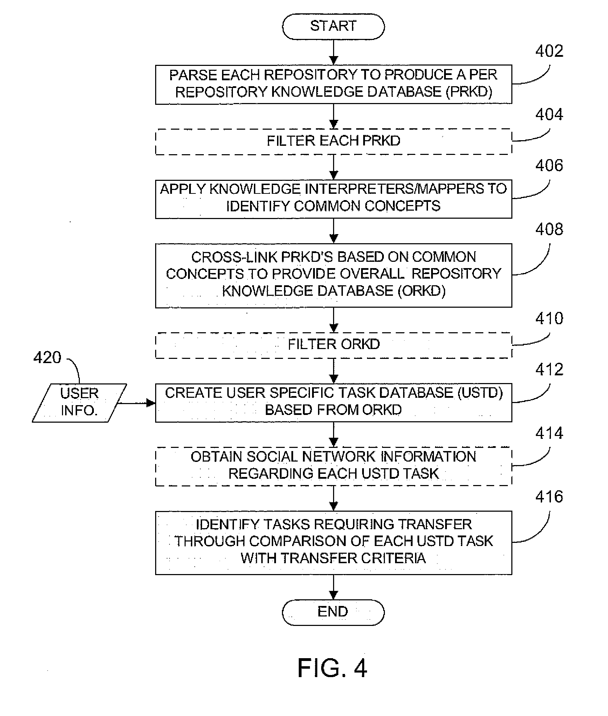

Referring now to FIG. 4, a more detailed implementation of processing for identifying tasks requiring knowledge transfer is described. In this embodiment, it is assumed, as is often the case, that multiple repositories exist given the multiple types of artifacts that may be available for a given project. For example, one or more document repositories may be available for user-generated text documents, another repository may be available for email artifacts, yet another for issue tracker reports, etc. With this background, processing begins at block 402 where each of the separate repositories is parsed using, for example, the techniques described above, to produce a corresponding, per repository knowledge database (PRKD). As used herein, a knowledge database stores the task or user information or both for each repository, as well as data that describes the repository (e.g., "a Microsoft "SHAREPOINT" server containing research paper documents that is remotely hosted"). As used herein, each PRKD includes the various tasks identified based on the parsing of the corresponding repository.

Continuing at block 404, each PRKD provided at block 402 is optionally filtered according to one or more filters. The filters employed at block 404 function to eliminate various tasks within a PRKD that do not meet certain task criteria. For example, certain "tasks" may be of such a trivial nature that they do not merit consideration for knowledge transfer. Thus, in a software development project, one line of code change in an artifact (as indicated in the revision history of a software module) may not merit consideration as a transferable task. Likewise, a formatting changes in a document may not merit consideration as a task. Further still, an email artifact including the expression "FYI" might not be worthy of consideration as a task. Through the initial parsing of the repository(ies) a lot of such tasks may be initially identified; the filters operate to prune the task list to relevant tasks. The particular criteria used by the filters will necessarily be based on the type of the repository and the desired granularity of the tasks.

Regardless whether filtering operations were applied to the various PRKDs at block 404, processing continues at block 406 where knowledge interpreters/mappers are applied across all of the PRKDs to identify common concepts. To the extent that various ones of the PRKDs may include common concepts, it may be inferred that the common concepts correspond to suitable task that may require knowledge transfer processing. Various techniques for knowledge interpretation/mapping are known in the art. For example, separate project-based, organization-based or domain-based interpreters/mappers may be employed. Using known programming techniques, these interpreters/mappers embody rules, semantics, ontologies, project, organization, and domain specific information that allows such common concepts to be identified. For example, the document repository may contain a task relevant to architecture knowledge for a project. In the email repository, artifacts may exist indicating that this architecture was sent to other stakeholders and feedback might have been provided in other, responsive emails. Using project, organization, and domain specific interpreters/mappers the system can map the email artifact and the document artifact such that they are considered part of the same task. In this manner, not only are common concepts identified and used to link up artifacts, new information may be identified, as in this example, the other stakeholders and other facets of this task. Similarly, in a software maintenance/service project an issue could be reflected in an issue tracker repository, but the communication relevant thereto could flow through emails stored in the email repository and the resulting business/technical information could be contained in various documents stored in a document repository. Again, the appropriately configured interpreters/mappers will be required to merge up tasks in different repositories referring to the same task.

Once common concepts within each of the different PRKDs have been identified, processing continues at block 408 where the common concepts are used to cross-link the various PRKDs to produce an overall repository knowledge database (ORKD). Various mechanisms for crosslinking the PRKDs may be employed. For example, ontological and/or semantic interpreters/mappers may be used for this purpose. As known in the art, an ontological interpreter/mapper uses a data model, representative of a set of concepts within a domain and the relationships between those concepts, to assess the relationships between the concepts present in the various PRKDs. A semantic interpreter/mapper operates by recognizing certain words or phrases to identify commonalities, i.e., it maps concepts from one "name space" to another thereby allowing links to common concepts to be established. Linking of the various PRKDs in this manner provides a more detailed picture of the possible tasks, corresponding to the various common concepts identified by the interpreters/mappers, for a given project. For example, it may be inferred that a common concept identified within multiple PRKDs potentially has a higher likelihood of being a relevant task for a project than a concept that is identified in only a small number of repositories (or even a single repository). The resulting ORKD includes all concepts identified as being potential tasks, preferably ordered according to their likelihood of being considered a task as judged, for example, by their likely importance to the project under consideration. Further, this information could be used for dividing the task responsibility, as described in further detail below. For example, through the process of cross linking PRKDs and generating the ORKD, it may be determined that a given task, labeled "ABC", may have relevant artifacts stored in a source code repository, email repository, and document repository. Since emails are primarily used for communication and contain business, client, and stakeholder relationship information, the person who should deal with the email artifacts relevant to the ABC task should be a person with project-relevant business awareness. In contrast, the document repository may contain technical architecture artifacts and should therefore be taken up by a technical architect.

After the ORKD has been populated with the potential tasks for the project, processing may optionally continue at block 410 where the ORKD is filtered in essentially the same manner as described above relative to block 404. At block 410, however, the filters employed may be configured to take into account the additional information resulting from the creation of the ORKD. That is, a first task represented in the ORKD may have significant cross-linkage between the various PRKDs and therefore represent a sufficiently significant task, whereas a second task in the ORKD may have relatively low cross-PRKD linkage and therefore may not merit further consideration.

Thereafter, processing continues at block 412 where user information 420 concerning one or more transitioning project participants is used to create a user-specific task database (USTD) based on the potential tasks stored in the ORKD. This is done using essentially the same techniques described above relative to block 304. The resulting USTD includes data identifying any tasks relevant to the one or more transitioning project participants that may require knowledge transfer. As described above relative to FIG. 3, the data identifying the task relevant to the one or more transitioning project participants may take any suitable form sufficient to readily allow subsequent identification.

Having established the USTD at block 412, processing may optionally continue at block 414 where the data for each task in the USTD is further augmented with so-called social network data. Social network data includes any data sufficient to identify one or more project participants, other than a given transitioning project participant, that are relevant to a given task within the USTD, i.e., a task that has previously been identified as being relevant to the transitioning project participant. Various techniques for gathering such social network data may be employed. For example, organizational structure information may be used to identify those project participants that have a structural relationship to the transitioning participant, e.g., the transitioning participant's manager, team leader, fellow team members, etc. Other objective relationship data may also be used. For example, co-authors of a specific document, software module, etc., or those explicitly indicated as sharing responsibility for a given task may be identified from the task artifacts for this purpose. Further still, any project participants that have exchanged correspondence (e.g., in the form of emails, SMS messages, etc.) concerning a specific task may be identified for this purpose. For example, in an maintenance project, the issue tracker reports could be used to retrieve the social network information by finding who has resolved the same or similar issues. Regardless of the manner in which it is collected, the social network data for each task in the USTD may be beneficially employed when subsequently determining potential knowledge transfer recipients for a given task, if necessary.

At block 416, tasks within the USTD (whether or not augmented with the social network data at block 414) are assessed through comparison with knowledge transfer criteria to determine which tasks, if any, in the USTD require knowledge transfer. As noted above relative to block 308, the knowledge transfer criteria may comprise various factors that, when assessed, may weigh in favor of or against knowledge transfer. Still other criteria concerning potential knowledge recipients may be employed. For example, the availability of knowledge recipient can be one of the criteria for knowledge transfer. Another criteria could be the degree to which the skill set of a potential knowledge recipient matches the needs of the task-if the skill set is a poor match, then either another potential recipient has to be found or the task may need to be broken into tasks requiring more readily matched skill sets. Those having skill in the art will appreciate that many such criteria are possible. Further, the instant disclosure is not restricted the usage to only one knowledge transfer criteria and could use multiple criteria in conjunction. Regardless of particular knowledge transfer criteria employed, the processing performed at block 416 may include the storing and/or outputting of information identifying those tasks within the USTD that have been marked as requiring knowledge transfer based on the comparison with the knowledge transfer criteria.

Referring now to FIG. 5, a technique for the identification of knowledge transfer recipients is illustrated. Beginning at block 502, and using substantially the same parsing techniques described above, the one or more repositories are parsed to identify any participants relevant to a given project. That is, the artifacts in the one or more repositories are analyzed to determine the identity of anyone that has contributed to the project under consideration. For example, electronic documents, emails, SMS messages or any other artifact susceptible to natural language processing or other types of information extraction processing may be analyzed to extract the names of people mentioned therein.

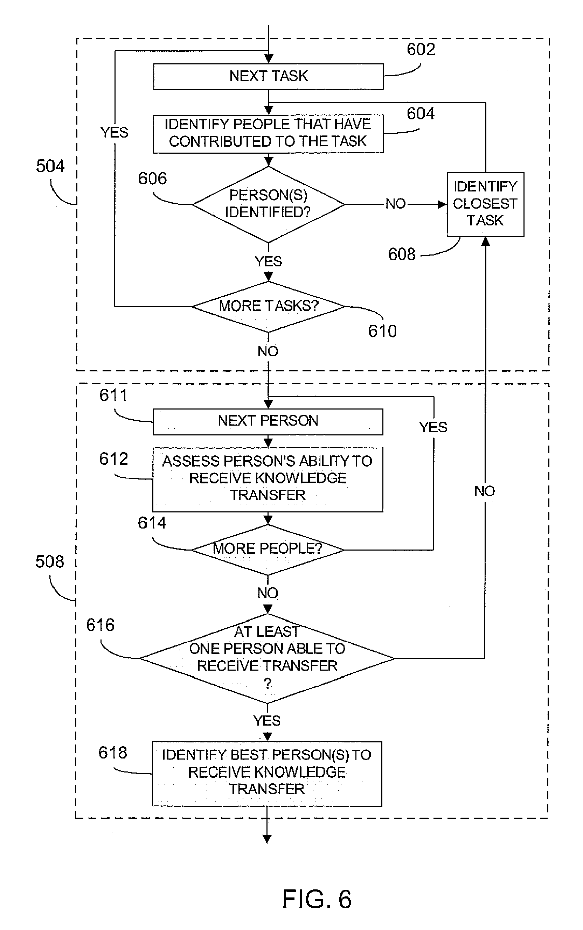

At block 504, knowledge transfer tasks 506, i.e., previously identified tasks that require knowledge transfer, are used to identify project participants from among the plurality of project participants from block 502 that are relevant to the knowledge transfer tasks. Note that the processing of block 504 is essentially the same as that described above relative to block 304. A more detailed implementation of the processing of block 504 is described below with further reference to FIG. 6. The resulting associated project participants for each knowledge transfer task are then used as input to block 508 where at least one knowledge transfer recipient, from among the corresponding associated project participants, is selected for each knowledge transfer task. As also described in further detail below with reference to FIG. 6, the selection of the at least one knowledge transfer recipient can be based on each participant's ability to receive knowledge transfer as well as their availability for this purpose. Thereafter, at block 510, information regarding the selected one or more knowledge recipients may be stored and/or output. Once again, the information regarding the knowledge recipient(s) need only be sufficient to allow subsequent identification.

Referring now to FIG. 6, a more detailed implementation of the processing of blocks 504 and 508, i.e., the respective identification of associated project participants relevant to and selection of a knowledge transfer recipient for a particular knowledge transfer task, is illustrated. In particular, the identification of associated project participants relevant to a knowledge transfer task (block 504) are further illustrated with reference to blocks 602-610. At block 602, a knowledge transfer task is identified. Thereafter, at block 604, it is determined if any project participants (previously identified, for example, at block 502 and obviously excluding the transitioning project participant) contributed to the identified knowledge transfer task. If no such project participants are identified as having contributed to the knowledge transfer task, processing continues at block 608 where the next closest task to the knowledge transfer task is identified. Multiple techniques for identifying the closest tasks may be employed for this purpose, typically depending on the nature of the tasks, and multiple criteria to determine which tasks are the closest may be employed. In an embodiment, similar tasks are identified through comparison of various task-related factors that may be used to infer task similarity. For example, a participant might not have worked on the exact task but could have worked on the same set of artifacts associated with the task. In another embodiment, the closest task may be identified based on comparison of the skill sets of the people who participated in each task. In the case of a maintenance project using an issue tracker repository, similar tasks could be identified by past resolution of similar issues based on identifying information such as ticket number. Similarly, in emails repositories, similar tasks might be identified through participants that share the same business contacts or client relations. Thereafter, the processing of block 604 is repeated on the basis of the closest task identified at block 608. This process may be repeated until at least one project participant is identified at block 606. In essence, the closest task is used as a "proxy" for the task originally identified at block 602 in order to identify one or more participants that may considered associated with the originally identified task. Once at least one associated project participant has been identified for a given knowledge transfer task, information identifying the at least one associated project participant (and the corresponding knowledge transfer task) is stored and processing continues at block 610 where it is determined whether additional knowledge transfer tasks are available for processing. If so, processing continues at blocks 602-608 as described above. If not, processing may continue with the selection of one more knowledge transfer recipients.

The selection of at least one knowledge transfer recipient for a knowledge transfer task (block 508) is further illustrated with reference to blocks 611-618. At block 611 an associated project participant is selected and, at block 612, that participant's ability to receive knowledge transfer for the corresponding knowledge transfer task is assessed based on various criteria. The particular criteria use may be generated explicitly by a system user or automatically determined. For example, in the former case, user inputs may be provided indicating that certain project participants are not available for any knowledge transfer. Alternatively, the user inputs could specifically designated participants that have the necessary technical backgrounds for various types of knowledge transfer tasks. Similarly, in the latter case, these same determinations may be made based on information about each project participant stored in the at least one repository. That is, rather than receiving explicit determinations from a system user, the necessary data to make such decisions may be accessed from the stored artifacts, e.g., professional biographies including technological, process and/or management expertise. This process of assessing the ability of project participants to receive knowledge transfer iterates through blocks 611, 612 and 614 until each of the associated project participants have been assessed. As each associated participant is assessed, his/her ability to receive knowledge transfer for the corresponding knowledge transfer task is stored as a suitable indicator.

Thereafter, those associated participants for each knowledge transfer task who have passed through the first level of validation, i.e., ability to receive knowledge transfer, are passed to block 616 where it is determined, for each knowledge transfer task, the availability of the associated participants to receive the knowledge transfer is assessed. To this end, personal schedules of each associated participant may be referenced (e.g., a participant's on-line calendar) to determine that participant's availability to receive the knowledge transfer. Other factors indicative of availability may be included in this determination, such as whether the person has been putting in significantly longer hours recently, indicating that he/she may not have the time to absorb a knowledge transfer. If none of the associated participants for a given knowledge transfer task are available to receive the knowledge transfer, processing may continue at block 608 where the next closest task to the knowledge transfer task is identified in an effort to find additional project participants, as described above, that might be available (and able) to receive the knowledge transfer. This process may be repeated until such time as available project participants are identified or until no other "closest" tasks (within a criteria-determined threshold) are identified.

In the latter instance, an indication would be provided that no suitable knowledge transfer recipient has been identified.

If, for a given knowledge transfer task, there is at least one associated participant that is both able and available to receive knowledge transfer, processing continues at block 618 where the best participant (or participants) to receive the knowledge transfer is (are) selected. Once again, this determination may be made on the basis of various criteria. For example, it may be desirable to distribute knowledge transfer tasks among a maximum number of participants so that the knowledge is well distributed within the project team rather than allocating knowledge transfer to one recipient who might be suitable for multiple tasks. In another embodiment, the knowledge transfer task could be distributed to multiple user as in the case where, for example, experts in the domains of design, implementation, client handling, etc. may needed to continue work on a particular knowledge transfer task.

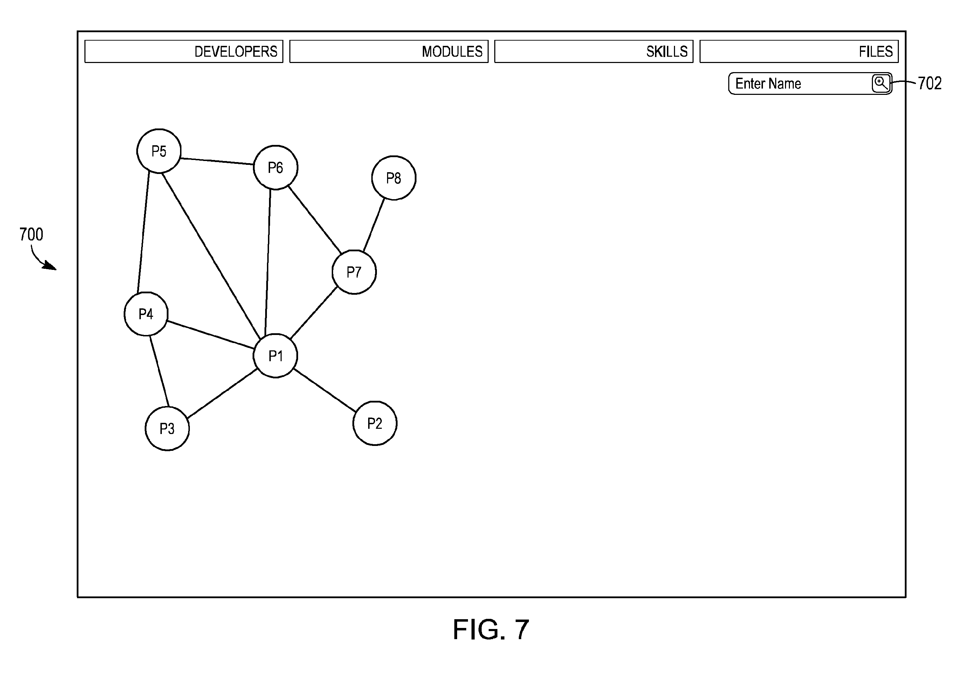

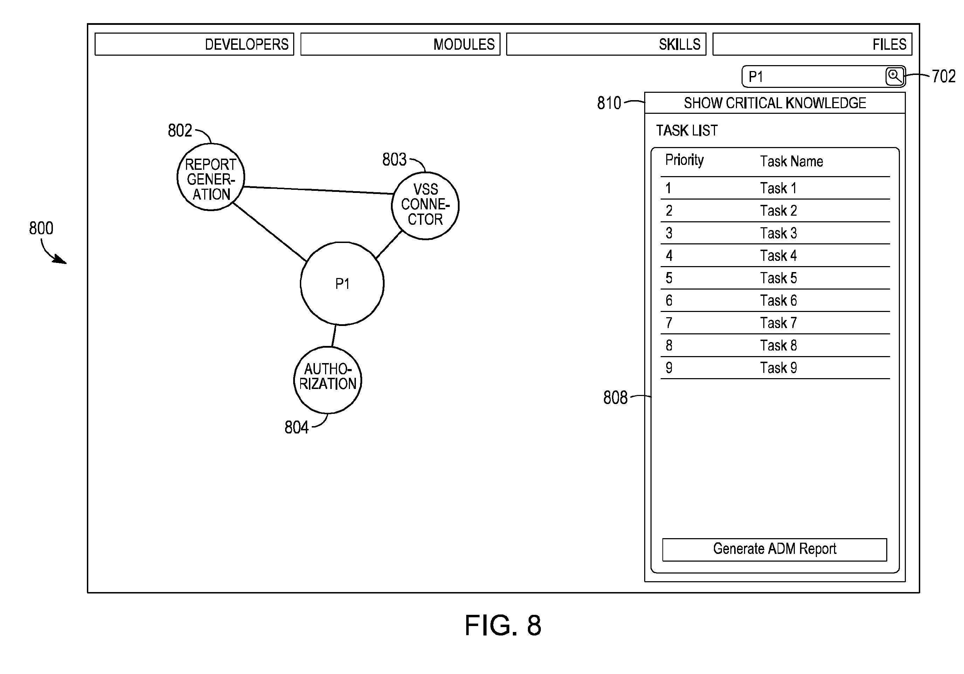

As noted above, an interactive interface 120 may be used to assist in the process of identifying knowledge transfer tasks and knowledge transfer recipients. Various examples of display screens that, collectively, establish a graphical user interface for this purpose are further illustrated in FIGs. 7-10. The illustrative display screens illustrated in FIGs. 7-10 may be displayed, for example, on the display 218 of the processing device 202, which also performs the process described above. Techniques for providing display screens of the type illustrated in FIGs. 7-10 are well known in the art. In a current embodiment, an application was created using Microsoft Windows Presentation Foundation technology running on a Microsoft Vista/XP platform. Similarly, a web based interface can be made available using HTML webpages. Other web based technology such as AJAX, ActiveX controls, XML, SOAP, Web Services, SOA architecture could also be leveraged to provide a web interface to the data. Further, the same could also be displayed in small form factor displays such as Cell phones or PDAs. Those skilled in the art will appreciate that there could be other forms of displaying the information not limited to the above-stated mechanisms. Referring now to FIG. 7, a first display screen 700 is provided and illustrates a plurality of project participants illustrated as selectable icons, labeled P1 through P8. The display screen also illustrates relationships between the various project participants, illustrates as lines connecting the selectable icons. As described above, the project participants can be identified based on parsing of one or more repositories including project-related artifacts. Likewise, the relationships may be identified based on the social network data described above. For example, in FIGs. 7-10, the illustrated relationships reflect project participants that have previously worked together on various software modules.

For illustrative purposes, it is assumed that a user viewing the first display screen 700 provides a selection input to select participant P1 through using any suitable mechanism (e.g., double clicking on the icon labeled "P1" or entering participant P1's name in a search box 702). That is, the user designates participant P1 as a transitioning project participant. In response, a second display screen 800 is provided which maps out icons (possibly selectable) of those tasks 802-804 that are relevant to the transitioning participant, P1. Additionally, a task list 808 summarizing the participant-related tasks may also be provided. As noted previously, not all tasks associated with a transitioning project participant necessarily require knowledge transfer, although this may be possible. In order to identify such knowledge transfer tasks, an appropriate button 810 (or other suitable input mechanism) is provided.

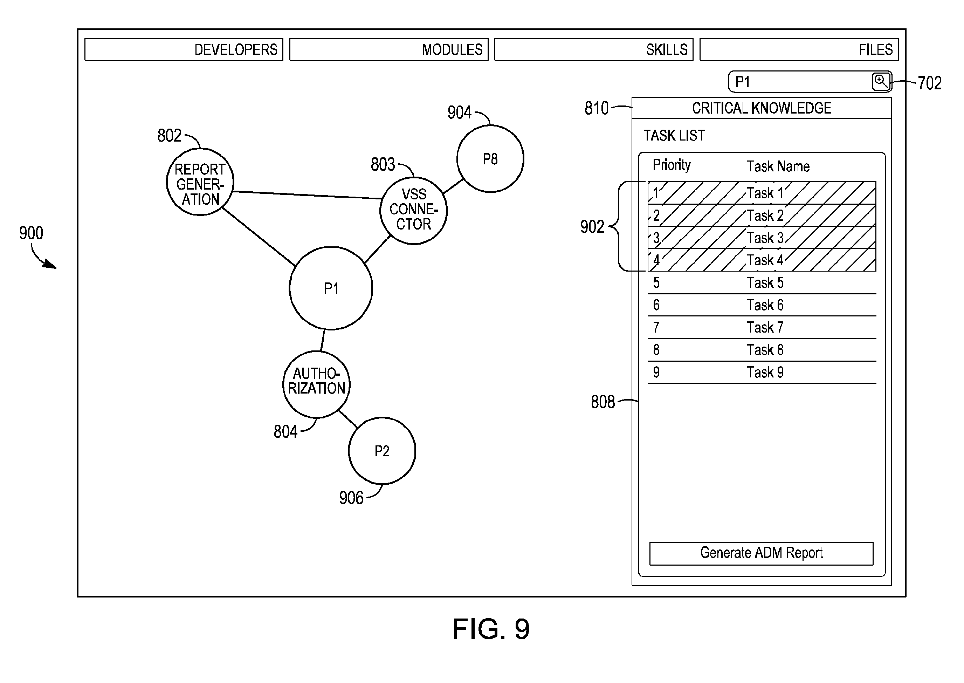

As shown in FIG. 9, selection of the "critical knowledge" button 810 causes a third display screen 900 to be provided in which the knowledge transfer tasks 803, 804, i.e., those tasks requiring knowledge transfer, are highlighted in the display whereas the other tasks (not requiring knowledge transfer) are de-emphasized. In a similar vein, highlighting may be applied to the list 808 to emphasize those tasks 902 requiring knowledge transfer. Further still, the knowledge transfer recipients 904, 906 corresponding to the illustrated knowledge transfer tasks 803, 804, identified as described above, may also be shown. For example, as shown, knowledge about the "VSS connector" task 803 is shown as being at risk (i.e., requiring knowledge transfer) and the suggested knowledge transfer recipient 904 is participant P8.

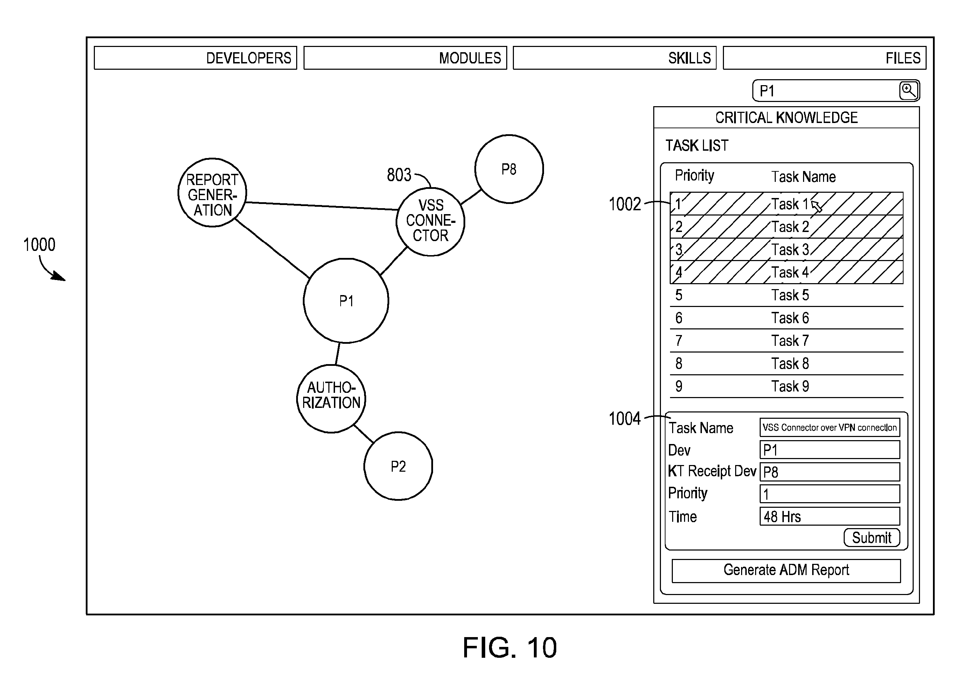

Finally, as illustrated in FIG. 10, a fourth display screen 1000 may be provided when a user selects a knowledge transfer task. For example, the user may select either an icon 803 or a listing entry 1002 (in this example, both corresponding to the "VSS connector" knowledge transfer task), thereby causing a details display 1004 to be provided. As shown, the details display may include a variety of information concerning the selected knowledge transfer task, such as the Task Name, the transitioning project participant (Dev) associated with the knowledge transfer task and the suggested knowledge transfer recipient (KT Recipient Dev). As further shown, a priority may be provided indicating the relative importance of the knowledge transfer task, and a time may also be provided that allows a user of the system to create a structured knowledge transfer plan. Note that the user can edit any of the displayed information and save the edited information by clicking the illustrated "Submit" button. In an embodiment, selection of the Submit button also causes appropriate notifications, e.g., in the form of emails, SMS messages, etc., to be sent to the transitioning project participant and/or the knowledge transfer recipient informing them of the need to perform knowledge transfer for the selected knowledge transfer task.

As described above, the instant disclosure describes various techniques for effecting knowledge transfer. In one embodiment, knowledge transfer tasks are identified through parsing of one or more repositories comprising project-related artifacts to ascertain tasks that are relevant to a transitioning project participant, and that may be further analyzed to determine whether knowledge transfer is necessary. In a similar vein, knowledge transfer recipients may be identified through similar parsing of the one or more repositories to identify project participants that are relevant to knowledge transfer tasks, with the resulting list of associated project participants narrowed down to selected knowledge transfer recipients according to their respective ability/availability to receive the knowledge transfer. Because these processes can be automated and based on stored artifacts, the subjectivity and variability of prior art techniques may be substantially reduced. For at least these reasons, the above-described techniques represent an advancement over prior art teachings.

While particular preferred embodiments have been shown and described, it will be obvious to those skilled in the art that changes and modifications may be made without departing from the instant teachings. It is therefore contemplated that any and all modifications, variations or equivalents of the above-described teachings fall within the scope of the basic underlying principles disclosed above and claimed herein.

## Claims

1. In at least one processing device, a method comprising:
identifying, based on artifacts concerning a project stored in at least one repository (204), a plurality of tasks concerning the project;
identifying, from among the plurality of tasks, at least one participant-related task relevant to a transitioning project participant;
determining, for each of the at least one participant-related task, whether the participant-related task requires knowledge transfer to provide at least one knowledge transfer task; and
storing information identifying the at least one knowledge transfer task.

2. The method as claimed in claim 1, further comprising displaying the information identifying the at least one knowledge transfer task.

3. The method as claimed in claim 1 or 2, further comprising:
identifying, based on the at least one knowledge transfer task, at least one knowledge transfer recipient, from a plurality of project participants, able to receive knowledge transfer concerning the at least one knowledge transfer task; and
storing information identifying the at least one knowledge transfer recipient.

4. In at least one processing device, a method comprising:
identifying, based on artifacts concerning a project stored in at least one repository (204), a plurality of project participants;
identifying, from among the plurality of project participants, at least one associated project participant relevant to at least one knowledge transfer task;
selecting, from the at least one associated project participant, at least one knowledge transfer recipient to receive knowledge transfer concerning the at least one knowledge transfer task; and
storing information identifying the at least one knowledge transfer recipient.

5. The method as claimed in claim 4, further comprising displaying the information identifying the at least one knowledge transfer recipient.

6. The method as claimed in claim 4 or 5, further comprising:
identifying, based on a transitioning project participant, the at least one knowledge transfer task from a plurality of tasks concerning the project; and
storing information identifying the at least one knowledge transfer task.

7. A device for performing knowledge transfer in project environment, said device comprising:
a first identifying means configured to identify, based on artifacts concerning a project stored in at least one repository (204) in communication with the processing device, a plurality of tasks concerning the project;
a second identifying means configured to identify, from among the plurality of tasks, at least one participant-related task relevant to a transitioning project participant;
a determining means configured to determine, for each of the at least one participant-related task, whether the participant-related task requires knowledge transfer to provide at least one knowledge transfer task; and
a storage means (214) configured to store information identifying the at least one knowledge transfer task.

8. The device as claimed in claim 7, wherein device is configured to identify whether the plurality of tasks are further operative to apply at least one project-specific task filter to the at least one repository (204).

9. The device as claimed in claim 7 or 8, wherein the device is configured to identify whether the at least one participant-related task are further operative to identify the at least one participant-related task based on information regarding the transitioning project participant.

10. The device as claimed in any of claims 7 to 9, wherein the device is configured to determine whether each participant-related task requires knowledge transfer are further operative to determine whether each participant-related task meets at least one knowledge transfer condition.

11. The device as claimed in any of claims 7 to 10, wherein the device further comprises:
a third identifying means configured to identify, based on the at least one knowledge transfer task, at least one knowledge transfer recipient, from a plurality of project participants, able to receive knowledge transfer concerning the at least one knowledge transfer task; and
a storage means (214) configured to store information identifying the at least one knowledge transfer recipient.

12. A device for performing knowledge transfer in project environment, said device comprising:
a first identifying means configure to identify, based on artifacts concerning a project stored in at least one repository (204) in communication with the processing device, a plurality of project participants;
a second identifying means configure to identify, from among the plurality of project participants, at least one associated project participant relevant to at least one knowledge transfer task;
a selecting means configured to select, from the at least one associated project participant, at least one knowledge transfer recipient to receive knowledge transfer concerning the at least one knowledge transfer task; and
a storing means (214) configured to store information identifying the at least one knowledge transfer recipient.

13. The device as claimed in claim 12, wherein the device is configured to identify whether the at least one associated project participant are further operative to identify those participants of the plurality of project participants that have contributed to the at least one knowledge transfer task.

14. The device as claimed in claim 12 or 13, wherein the device is configured to identify whether the at least one associated project participants are further operative to identify those participants of the plurality of participants that have contributed to at least one additional task closely related to the at least one knowledge transfer task.

15. The device as claimed in any of claims 12 to 14, wherein the device further comprises:
a third identifying means configured to identify, based on a transitioning project participant, the at least one knowledge transfer task from a plurality of tasks concerning the project; and
a storing means (214) configured to store information identifying the at least one knowledge transfer task.
